# FASCICULE DE BREVET EUROPEEN

(11) **EP 4 558 391 B1**
(45) Date de publication et mention de la délivrance du brevet: **15.04.2026**
(21) Numéro de dépôt: 23739201.4
(22) Date de dépôt: 04.07.2023
(51) Int. Cl.: B62M 6/75

(54) **SYSTÈME POUR L'ASSISTANCE MOTORISÉE D'UN CYCLE PAR FRICTION COMPORTANT UN BOÎTIER MOTEUR AMOVIBLE**
SYSTEM ZUR MOTORISCHEN UNTERSTÜTZUNG EINES FAHRRADS MITTELS REIBUNG MIT EINER ABNEHMBAREN ANTRIEBSEINHEIT
SYSTEM FOR THE MOTORIZED ASSISTANCE OF A BICYCLE USING FRICTION, COMPRISING A REMOVABLE DRIVE UNIT

(30) Priorité: 18.07.2022 FR 2207301
(43) Date de publication de la demande: 28.05.2025
(73) Titulaire: Vebo, 59100 Roubaix (FR)
(72) Inventeur: HABART, Vincent, 59170 Croix (FR)
(74) Mandataire: RVDB
(86) Numéro de dépôt international: PCT/EP2023/068448
(87) Numéro de publication internationale: WO 2024/017629

(56) Documents cités:
- EP-A2- 3 543 104
- FR-A1- 2 946 611
- US-A- 5 671 821
- US-A- 688 838

## Description

### Domaine de l'invention

La présente demande de brevet se rapporte au domaine des bicyclettes et plus particulièrement aux systèmes pour l'assistance motorisée d'une bicyclette par friction qui comporte un boîtier moteur amovible.

### Etat de la technique

Il est connu d'équiper une bicyclette avec un système pour l'assistance motorisée qui comporte un moteur électrique logé dans un boîtier et un mécanisme d'entraînement qui est mu par le moteur électrique.

Le mécanisme d'entraînement du système pour l'assistance motorisée entraîne généralement l'axe de la roue arrière ou de la roue avant de la bicyclette, ou l'axe du pédalier de la bicyclette, pour transmettre un couple d'entraînement permettant d'assister l'utilisateur de la bicyclette dans son effort de pédalage.

Un tel type de système, tel que celui décrit et représenté dans le document US7568714B2, souffre d'une certaine complexité de mise en place sur la bicyclette et requiert un mécanisme d'entraînement complexe.

Une alternative consiste à équiper la bicyclette d'un système pour l'assistance motorisée d'un cycle par friction.

Ce type de système par friction comporte généralement un boîtier qui est monté sur la bicyclette et qui porte un moteur électrique alimenté par une source d'énergie électrique, comme une batterie. Aussi, le moteur comporte un galet moteur cylindrique qui est entraîné en rotation autour d'un axe transversal d'entraînement.

Le galet moteur est prévu pour entraîner une roue de la bicyclette par friction sur une bande de roulement d'un pneumatique équipant la roue.

Le document US2019291815A1 décrit et représente un tel système pour l'assistance motorisée d'un cycle par friction. Document EP 3 543 104 A2 montre le préambule de la revendication 1.

Ce type de système par friction permet d'offrir une assistance à une bicyclette avec un coût modéré et une masse supplémentaire embarquée sur la bicyclette relativement limitée.

Toutefois, ce type de système par friction selon l'art antérieur n'est pas adapté pour être monté et démonté aisément.

### Exposé de l'invention

La présente invention a notamment pour but de résoudre les inconvénients de l'art antérieur précité. On atteint cet objectif, ainsi que d'autres qui apparaîtront à la lecture de la description qui suit, avec un système pour l'assistance motorisée d'un cycle, qui comporte un mât de support qui comprend au moins un bras s'étendant depuis une embase prévue pour être reliée sur un cycle, jusqu'à une extrémité libre formant un doigt de verrouillage transversal perpendiculaire audit bras, et le système comportant un boîtier moteur amovible qui est adapté pour être monté sur ledit mât et qui comporte :
un galet moteur cylindrique qui est alimenté par une source d'énergie électrique et qui est entraîné en rotation autour d'un axe transversal d'entraînement, ledit galet moteur étant prévu pour entraîner la roue du cycle par friction sur une bande de roulement d'un pneumatique équipant ladite roue, un logement de verrouillage du boîtier sur le mât, qui s'étend tangentiellement au galet moteur suivant un axe d'insertion du boîtier, depuis une entrée formant un canal, et
un taquet de verrouillage qui est agencé dans le logement de verrouillage et qui comporte un cran d'arrêt prévu pour coopérer avec le doigt de verrouillage du mât pour verrouiller le boîtier sur le mât, et qui délimite une face d'appui s'étendant tangentiellement au galet moteur, ladite face d'appui étant destinée à coopérer avec un premier côté du bras du mât.

Selon la présente invention, le boîtier est apte à être entraîné, dans un mouvement de verrouillage dirigé vers l'embase du mât tangentiellement au galet moteur, depuis une position libre dans laquelle le boîtier est désolidarisé du mât, jusqu'à une position d'utilisation dans laquelle le boîtier est bloqué en translation le long du bras du mât suivant un premier sens et un second sens opposés, respectivement par le doigt de verrouillage qui est en appui sur le cran d'arrêt du taquet et par le galet moteur qui est en appui sur le pneumatique, et dans laquelle le boîtier est bloqué en pivotement autour d'un axe transversal matérialisé par le doigt de verrouillage, suivant le sens de rotation du galet moteur, par le bras du mât de support qui est en appui contre ladite face d'appui prévue à cet effet.

Le système selon l'invention permet de monter et démonter de façon manuelle un boîtier motorisé pour l'assistance au pédalage d'un cycle.

De plus, le système tire profit des propriétés élastiques du pneumatique pour permettre au boîtier moteur d'atteindre sa position d'utilisation dans laquelle le boîtier est verrouillé sur le mât. Suivant d'autres caractéristiques optionnelles de l'invention, prises seules ou en combinaison :
- le taquet est monté coulissant dans le logement, tangentiellement au galet moteur, entre une pluralité de positions dans chacune desquelles le taquet est apte à être immobilisé par un dispositif de blocage, pour permettre un réglage de l'écartement du boîtier par rapport au pneumatique lorsque le boîtier occupe sa position d'utilisation, afin de régler la pression exercée par le galet moteur sur le pneumatique. Le réglage de la pression exercée par le galet sur le pneumatique permet d'obtenir une friction adéquate entre le galet moteur et le pneumatique pour limiter les risques de patinage du galet ;
- le dispositif de blocage du taquet comporte au moins un verrou de coincement automatique du taquet, qui coopère avec le mât par coopération de forme pour verrouiller automatiquement le taquet lorsque le boîtier bascule dans sa position d'utilisation. Cette caractéristique permet au galet moteur d'être toujours correctement positionné par rapport au pneumatique. Aussi, le dispositif de blocage automatique du taquet permet une mise en place du mât de support sur le cycle moins précise ;
- le dispositif de blocage du taquet comporte un ressort pour rappeler élastiquement le taquet à l'encontre du doigt de verrouillage du mât Le ressort permet au taquet de suivre le doigt de verrouillage ;
- le taquet délimite un chemin de came qui est prévu pour coopérer avec le doigt de verrouillage du mât et qui présente successivement, suivant l'axe d'insertion du boîtier, une première portion et une seconde portion formant deux pentes opposées, la seconde portion étant formée au moins en partie par le cran d'arrêt, et au cours dudit mouvement de verrouillage, le doigt de verrouillage suiveur glisse sur ladite première portion du chemin de came de sorte que le boîtier coulisse vers le pneumatique le long du mât jusqu'à ce que le galet moteur presse et déforme le pneumatique de la roue du cycle puis, successivement, le doigt de verrouillage glisse sur ladite seconde portion du chemin de came, entraînant une bascule du boîtier autour du doigt de verrouillage et provoquant le relâchement partiel de la pression exercée par le galet moteur sur le pneumatique, jusqu'à ce que le boîtier atteigne sa position d'utilisation.
- le canal est conçu pour guider le mât au cours du mouvement de verrouillage du boîtier, et le canal comporte une paroi qui est adaptée pour être en appui sur un second côté du bras du mât, lorsque le boîtier occupe sa position d'utilisation, pour s'opposer au pivotement du boîtier autour d'un axe transversal matérialisé par le doigt de verrouillage, suivant un sens opposé au sens de rotation du galet moteur ;
- le mât est prévu pour s'étendre suivant une direction perpendiculaire à l'axe de la roue du cycle ;
- le mât comporte deux bras qui s'étendent parallèlement chacun depuis une première extrémité formant ladite embase du mât, jusqu'à une seconde extrémité reliée sur ledit doigt de verrouillage ;
- le mât est monté sur une seconde fourche de support comprenant une première jambe et une seconde jambe qui sont prévues pour s'étendre de part et d'autre de ladite roue du cycle.

L'invention concerne également un cycle qui comporte au moins une roue équipée d'un pneumatique, caractérisé en ce qu'il est équipé d'un système pour l'assistance motorisée du type décrit précédemment.

### Brève description des dessins

D'autres caractéristiques, buts et avantages de l'invention apparaîtront à la lecture de la description détaillée qui suit pour la compréhension de laquelle on se reportera aux dessins annexés dans lesquels :
[Fig. 1] est une vue schématique de profil d'une bicyclette équipée d'un système pour l'assistance motorisée comportant un boîtier moteur amovible qui coopère par friction avec la roue avant de la bicyclette, selon l'invention ;
[Fig. 2] est une vue schématique de face de la bicyclette de la figure 1, sans le boîtier moteur ;
[Fig. 3] est une vue en perspective du boîtier moteur de la figure 1 ;
[Fig. 4] est une vue schématique de profil en coupe longitudinale du boîtier moteur du système de la figure 1 au début d'un mouvement de verrouillage du boîtier moteur sur le mât de support ;
[Fig. 5] est une vue schématique de profil en coupe longitudinale du boîtier moteur de la figure 1 au cours du mouvement de verrouillage du boîtier moteur sur le mât de support, dans une première position intermédiaire ;
[Fig. 6] est une vue schématique de profil en coupe longitudinale du boîtier moteur de la figure 1 au cours du mouvement de verrouillage du boîtier moteur sur le mât de support, dans une seconde position intermédiaire ;
[Fig. 7] est une vue schématique de profil en coupe longitudinale du boîtier moteur de la figure 1 dans une position d'utilisation du boîtier moteur verrouillée sur le mât ;
[Fig. 8] est une vue schématique de dessus en coupe transversale suivant l'axe 8-8 de la figure 9, illustrant le dispositif de blocage du boîtier moteur dans sa position d'utilisation ;
[Fig. 9] est une vue schématique en coupe transversale suivant l'axe 9-9 de la figue 8, illustrant le dispositif de blocage du boîtier moteur dans sa position d'utilisation ;
[Fig. 10] est une vue schématique en coupe transversale suivant l'axe 10-10 de la figue 13, illustrant le dispositif de blocage du boîtier moteur dans sa position d'utilisation, selon une variante de réalisation de l'invention ;
[Fig. 11] est une vue schématique de dessus en coupe transversale suivant l'axe 12-12 de la figure 10, illustrant le dispositif de blocage du boîtier moteur au cours du mouvement de verrouillage du boîtier moteur, selon la variante de réalisation de l'invention de la figure 10 ;
[Fig. 12] est une vue schématique de dessus en coupe transversale suivant l'axe 12-12 de la figure 10, illustrant le dispositif de blocage du boîtier moteur dans sa position d'utilisation, selon la variante de réalisation de l'invention de la figure 10 ;
[Fig. 13] est une vue schématique de profil en coupe longitudinale suivant l'axe 13-13 de la figure 10, illustrant le dispositif de blocage du boîtier moteur dans sa position d'utilisation, selon la variante de réalisation de l'invention de la figure 10.

Dans la description et les revendications, on adoptera à titre non limitatif la terminologie longitudinal, vertical et transversal en référence au trièdre L, V, T indiqué aux figures, en considérant que le cycle adopte une position verticale d'utilisation et se déplace longitudinalement vers l'avant.

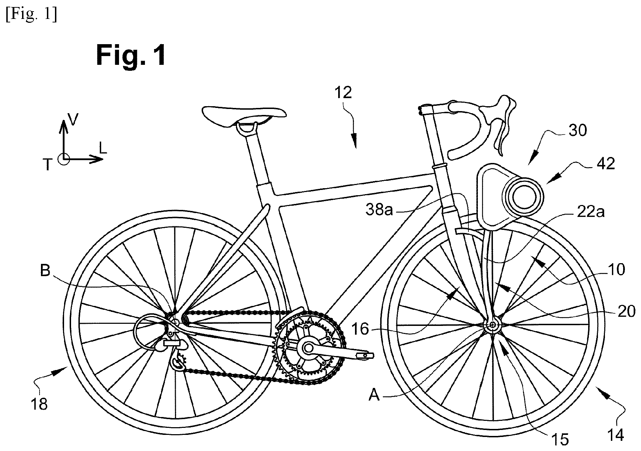

Aussi, on utilisera à titre non limitatif les expressions « supérieur », « inférieur » et « bas », « haut » en référence à la partie supérieure et à la partie inférieure respectivement de la figure 1.

Sur l'ensemble de ces figures, les éléments identiques ou similaires sont repérés par des signes de référence identiques ou similaires.

### Description détaillée

On a représenté en figure 1 un système 10 pour l'assistance motorisée d'un cycle 12.

Le cycle 12 est une bicyclette qui comporte une roue avant 14 et un moyeu 15 associés, qui sont montés libres en rotation sur une première fourche 16 du cycle 12, autour d'un premier axe A transversal de rotation.

De plus, le cycle 12 comporte une roue arrière 18 motrice qui est montée libre en rotation sur le cadre du cycle 12, autour d'un second axe B transversal de rotation.

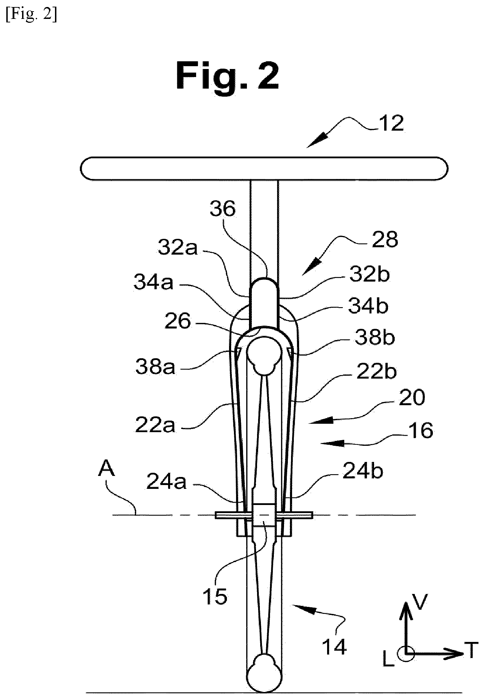

Selon la figure 2, le système 10 selon l'invention comporte une seconde fourche 20 de support qui comprend une première jambe 22a et une seconde jambe 22b qui s'étendent radialement de part et d'autre de la roue avant 14, chacune depuis un tronçon inférieur 24a, 24b respectivement monté sur le moyeu 15 de la roue avant 14, jusqu'à une portion de jonction 26 transversale qui raccorde la première jambe 22a sur la seconde jambe 22b.

La portion de jonction 26 de la seconde fourche 20 est prolongée par un mât 28 qui est prévu pour le support d'un boîtier 30 moteur amovible.

A cet effet, le mât 28 présente une forme en U inversé comportant un premier bras 32a et un second bras 32b qui s'étendent globalement verticalement respectivement depuis une première embase 34a et une seconde embase 34b reliées sur la portion de jonction 26 de la seconde fourche 20, jusqu'à une extrémité libre formant un doigt 36 de verrouillage transversal qui relie le premier bras 32a et le second bras 32b du mât 28.

A titre non limitatif, le mât 28 pour le support du boîtier 30 moteur peut être fixé directement sur des écrous de fixation d'accessoires qui sont parfois présents d'origine sur la première fourche 16 du cycle 12, et qui sont prévus généralement pour la fixation d'un garde boue ou d'un porte bagage avant.

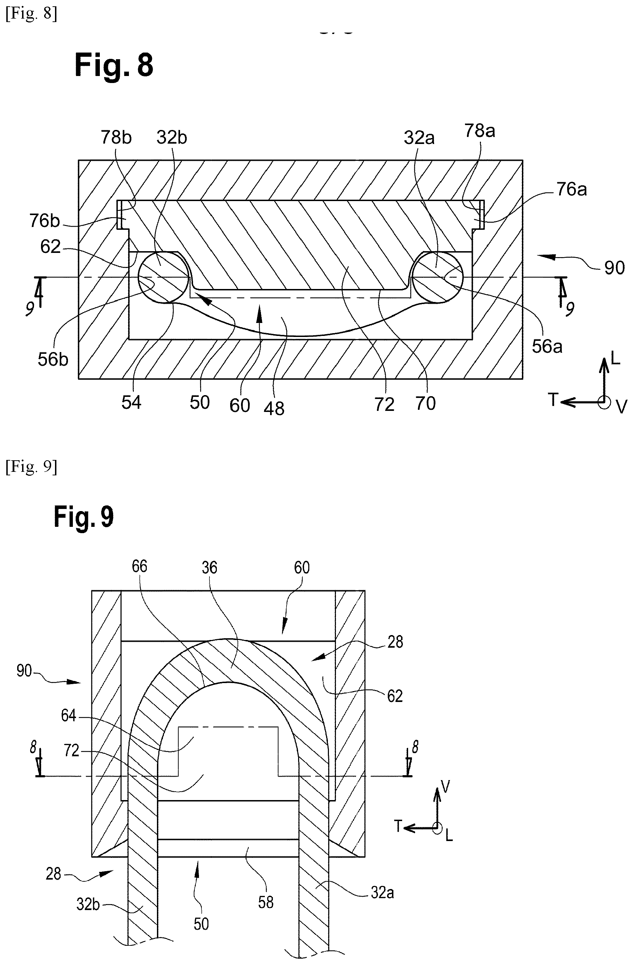

Comme on peut le voir aux figures 2 et 9, le doigt 36 de verrouillage présente une forme de boucle cintrée.

De préférence, le mât 28 s'étend globalement verticalement et radialement par rapport à la roue avant 14 du cycle 12.

De plus, selon les figures 1 et 2, la seconde fourche 20 comporte une première branche 38a et une seconde branche 38b qui sont reliées sur la première fourche 16 du cycle 12, pour bloquer en rotation la seconde fourche 20 sur la première fourche 16.

A titre non limitatif, la seconde fourche 20 peut ne comporter qu'une seule branche 38a qui est reliée sur une des jambes 22a, 22b ou directement sur le cadre du cycle 12 au-dessus de la roue avant 14.

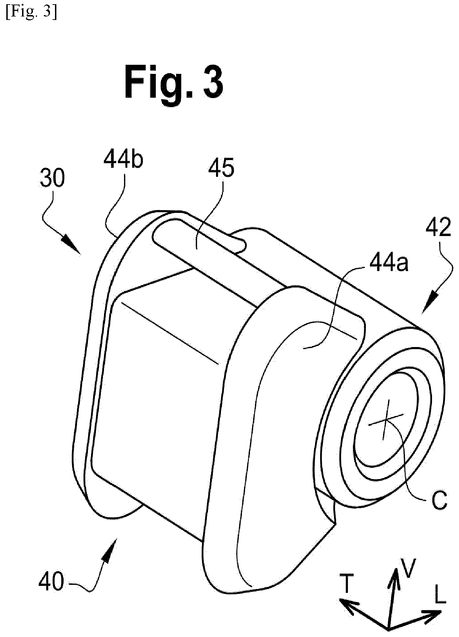

En référence à la figure 3, le boîtier 30 moteur comporte un carter 40 qui porte un galet moteur 42. Le carter 40 est flanqué d'une première joue 44a et d'une seconde joue 44b entre lesquelles une poignée 45 s'étend transversalement.

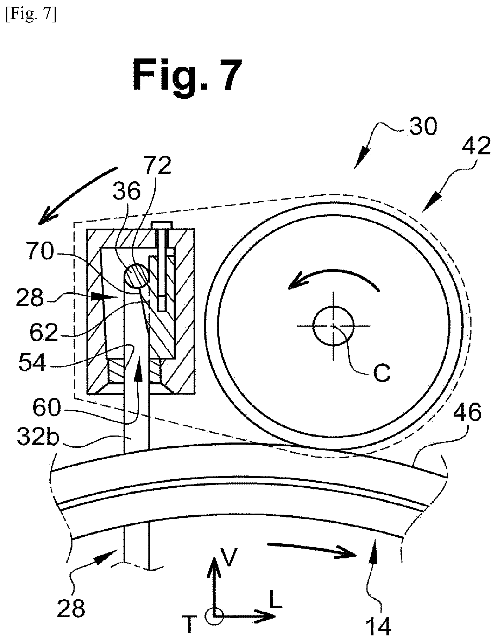

Le galet moteur 42 est un cylindre qui est conçu pour entraîner la roue avant 14 du cycle 12 par friction sur une bande de roulement du pneumatique 46 de la roue avant 14, comme illustré à la figure 7.

Dans ce but, le galet moteur 42 est associé à un moteur électrique (non visible sur les figures) qui est alimenté en énergie électrique par une batterie (non représentée) et qui entraîne le galet moteur 42 en rotation autour d'un axe C transversal d'entraînement.

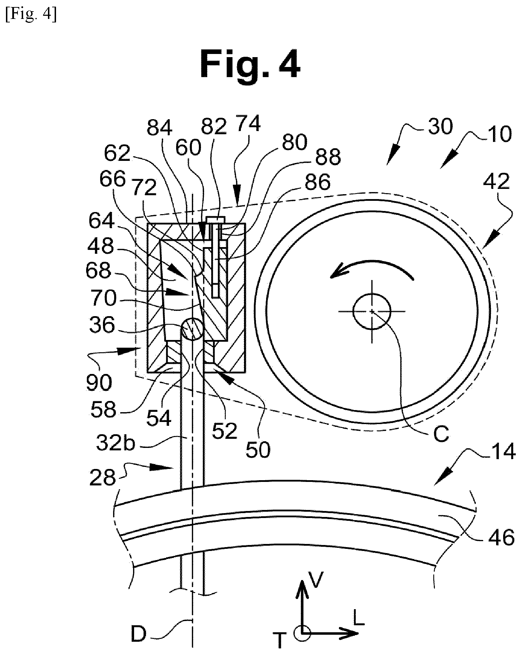

Aussi, en référence à la figure 4, le boîtier 30 délimite un logement 48 de verrouillage du boîtier 30 sur le mât 28, qui s'étend tangentiellement au galet moteur 42 suivant un axe D d'insertion vertical du boîtier 30, depuis une entrée formant un canal 50 de guidage du mât 28.

L'axe D d'insertion du boîtier est parallèle au mât 28 et il matérialise globalement la direction à suivre pour insérer le boîtier 30 sur le mât 28.

Comme on peut le voir aux figures 4 et 8, le canal 50 est délimité longitudinalement par une paroi avant 52 verticale et par une paroi arrière 54 verticale, et il est délimité transversalement par une première joue 56a verticale et par une seconde joue 56b verticales opposées.

De plus, le canal 50 présente une bouche 58 chanfreinée visible aux figures 4 et 9, prévue pour guider le mât 28 et favoriser l'insertion du mât 28 dans le logement 48 de verrouillage.

De façon complémentaire, le boîtier 30 comprend un taquet 60 de verrouillage qui est agencé dans le logement 48 de verrouillage.

Le taquet 60 délimite une face d'appui 62 avant qui s'étend verticalement et tangentiellement au galet moteur 42, la face d'appui 62 étant destinée à coopérer avec un premier côté avant de chacun des bras 32a, 32b du mât 28.

Aussi, le taquet 60 présente une excroissance 64 qui fait saillie longitudinalement vers l'arrière depuis la face d'appui 62.

En référence aux figures 4 et 9, l'excroissance 64 comporte une encoche formant un cran d'arrêt 66 qui est prévu pour coopérer avec le doigt 36 de verrouillage du mât 28, pour verrouiller le boîtier 30 sur le mât 28.

Le cran d'arrêt 66 présente une forme en U inversé complémentaire à la forme du doigt 36 de verrouillage, comme on peut le voir à la figure 9.

De plus, le taquet 60 délimite un chemin de came 68 qui est prévu pour coopérer avec le doigt 36 de verrouillage du mât 28 au cours de l'insertion du mât 28 dans le logement 48.

Comme on peut le voir à la figure 4, le chemin de came 68 présente successivement, du bas vers le haut suivant l'axe D d'insertion du boîtier 30, une première portion 70 inférieure qui forme une rampe inclinée vers l'arrière par rapport à la face d'appui 62, et une seconde portion 72 supérieure qui forme une rampe inclinée vers l'avant.

La seconde portion 72 du chemin de came 68 est formée par le cran d'arrêt 66 du taquet 60.

Selon une autre caractéristique de l'invention, le taquet 60 est monté coulissant dans le logement 48, selon une direction verticale tangentielle au galet moteur 42, entre une pluralité de positions (dont une seule est représentée sur les figures) dans chacune desquelles le taquet 60 est apte à être immobilisé par un dispositif de blocage 74.

A cet effet, comme on peut le voir à la figure 8, le taquet 60 comporte un premier rail 76a et un second rail 76b qui s'étendent verticalement de part et d'autre du taquet 60, suivant une direction verticale de coulissement.

Le premier rail 76a et le second rail 76b sont montés coulissant dans une première gorge 78a et une seconde gorge 78b de guidage respectivement, qui sont délimitées par le logement 48.
e dispositif de blocage 74 du taquet 60 comprend, à titre d'exemple, une vis 80 verticale comprenant une tête 82 de réglage qui repose sur une paroi supérieure 84 du logement 48 et un corps 86 qui s'étend verticalement à travers un trou 88 de passage ménagé dans la paroi supérieure 84 du logement 48 et qui est vissée dans le taquet 60.

Ainsi, la vis 80 permet de bloquer le taquet 60 en coulissement et permet également de faire monter et de faire de descendre le taquet 60 par vissage et par dévissage respectivement de la vis 80.

On comprend que la vis peut tourner sur elle-même, mais que la tête de vis 82 reste toujours en contact avec la paroi supérieure 84, au risque que la vis monte et descende entrainant avec elle le taquet 60, ce qui nuirait au réglage.

De préférence, le logement 48 est délimité par une cartouche 90 qui est montée de façon amovible dans le boîtier 30, notamment pour favoriser l'accès au dispositif de blocage 74, afin de régler la position du taquet 60.

Comme on le verra plus en détail par la suite, le réglage de la position du taquet 60 permet un réglage de l'écartement du boîtier 30 par rapport au pneumatique 46.

Le boîtier 30 amovible est apte à être entraîné, dans un mouvement de verrouillage dirigé de haut en bas suivant le mât 28, depuis une position libre dans laquelle le boîtier 30 est désolidarisé du mât 28, jusqu'à une position d'utilisation illustrée aux figures 7, 8 et 9, dans laquelle le boîtier 30 est verrouillé sur le mât 28 et bloqué en translation le long du mât 28.

Dans sa position d'utilisation, le boîtier 30 est bloqué en translation sur le mât 28 suivant les axes transversal, longitudinal et vertical, et il est bloqué en rotation sur le mât 28 autour de ces mêmes axes.

Plus particulièrement, le boîtier 30 est bloqué en translation verticale vers le haut par le doigt 36 de verrouillage qui est en appui sur le cran d'arrêt 66 du taquet 60.

A l'opposé, le boîtier 30 est bloqué en translation verticale vers le bas, par le galet moteur 42 qui est en appui sur le pneumatique 46.

De plus, le boîtier 30 est bloqué en translation transversale et en rotation autour d'un axe longitudinal, par les bras 32a, 32b du mât 28 qui coopèrent avec le cran d'arrêt 66 du taquet 60 et qui coopèrent également avec la première joue 56a et la seconde joue 56b du canal 50.

Aussi, le boîtier 30 est bloqué en translation longitudinale vers l'avant par un premier côté du mât 28 qui est en appui sur la face d'appui 62 du taquet 60, et vers l'arrière par un second côté du mât 28 qui est en appui sur la paroi arrière 54 du canal 50 de guidage du mât 28.

De même, le boîtier 30 est bloqué en rotation autour d'un axe transversale matérialisé par le doigt 36 de verrouillage, suivant le sens de rotation du galet moteur 42 et suivant un sens opposé au sens de rotation du galet moteur 42, par les bras 32a, 32b du mât 28 qui sont en appui contre la face d'appui 62 prévue à cet effet, et par la paroi arrière 54 du canal 50 de guidage du mât 28.

Le passage du boîtier 30 depuis sa position libre jusqu'à sa position d'utilisation est décrit ci-dessous, de façon chronologique.

En référence à la figure 4, au cours du mouvement de verrouillage du boîtier 30, le doigt 36 de verrouillage est guidé par la bouche 58 chanfreinée du canal 50 pour pénétrer dans le logement 48.

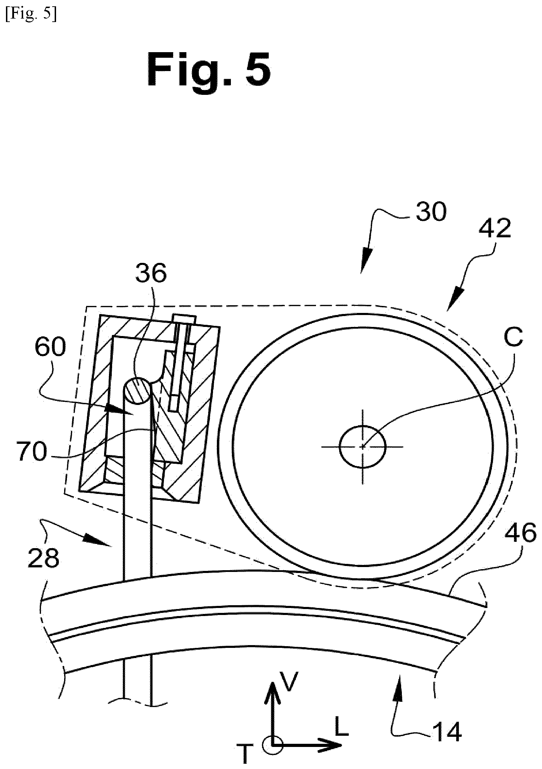

Ensuite, comme on peut le voir sur les figures 4 et 5, l'utilisateur insert le boîtier 30 sur le mât 28, le doigt 36 de verrouillage glisse sur la première portion 70 du chemin de came 68 vers le bas, de sorte que le boîtier 30 translate vers le bas parallèlement à la première portion 70 du chemin de came 68, jusqu'à ce que le galet moteur 42 entre en contact avec le pneumatique 46 de la roue du cycle 12, comme illustré à la figure 5.

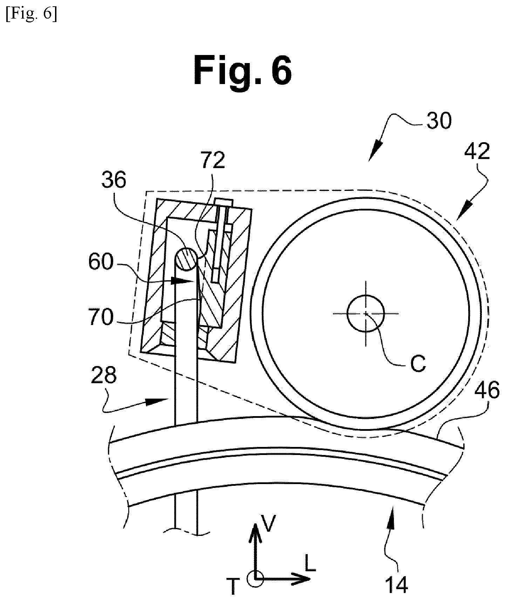

Pour poursuivre le mouvement de verrouillage du boîtier 30 vers sa position d'utilisation, l'utilisateur appuie sur la poignée 45 du boîtier, le galet moteur 42 presse et déforme le pneumatique 46, ce qui permet au doigt 36 de verrouillage de poursuivre sa course à l'encontre du pneumatique 46, jusqu'à ce qu'il atteigne la seconde portion 72 du chemin de came 68, comme illustré à la figure 6.

Enfin, le doigt 36 de verrouillage glisse sur la seconde portion 72 du chemin de came 68, entraînant une légère bascule du boîtier 30 autour du doigt 36 de verrouillage suivant un sens de pivotement antihoraire correspondant au sens de rotation du galet moteur 42.

Le basculement du boîtier 30 provoque le relâchement partiel de la pression exercée par le galet moteur 42 sur le pneumatique 46, jusqu'à ce que le boîtier 30 atteigne sa position d'utilisation illustrée à la figure 7.

Lorsque le boîtier 30 passe dans sa position d'utilisation et se verrouille sur le mât 28, il émet un claquement caractéristique et rassurant pour l'utilisateur.

A l'inverse, le passage du boîtier 30 depuis sa position d'utilisation jusqu'à sa position libre consiste à tirer sur la poignée 45 du boîtier 30, de sorte que le doigt 36 de verrouillage glisse sur la seconde portion 72 du chemin de came 68, entraînant une légère bascule du boîtier 30 autour du doigt 36 de verrouillage par effet de levier, suivant un sens de pivotement horaire, et de sorte que le galet moteur 42 presse et déforme le pneumatique 46 jusqu'à ce que le doigt 36 de verrouillage quitte la seconde portion 72 du chemin de came 68 et glisse sur la première portion 70 du chemin de came 68 vers le haut pour permettre le retrait du boîtier 30.

Ainsi, le boîtier 30 du système 10 pour l'assistance motorisée du cycle 12 est adapté pour être monté et démonté aisément sur le cycle 12 par un mouvement simple, sans exiger d'outils particuliers.

On comprendra que la hauteur de réglage du taquet 60 permet d'ajuster avantageusement l'écartement entre le boîtier 30 et le pneumatique 46, afin de régler la pression exercée par le galet moteur 42 sur le pneumatique 46 à une valeur idéale qui permet au galet moteur 42 d'entraîner la roue avant 14 du cycle 12 par friction, sans patiner.

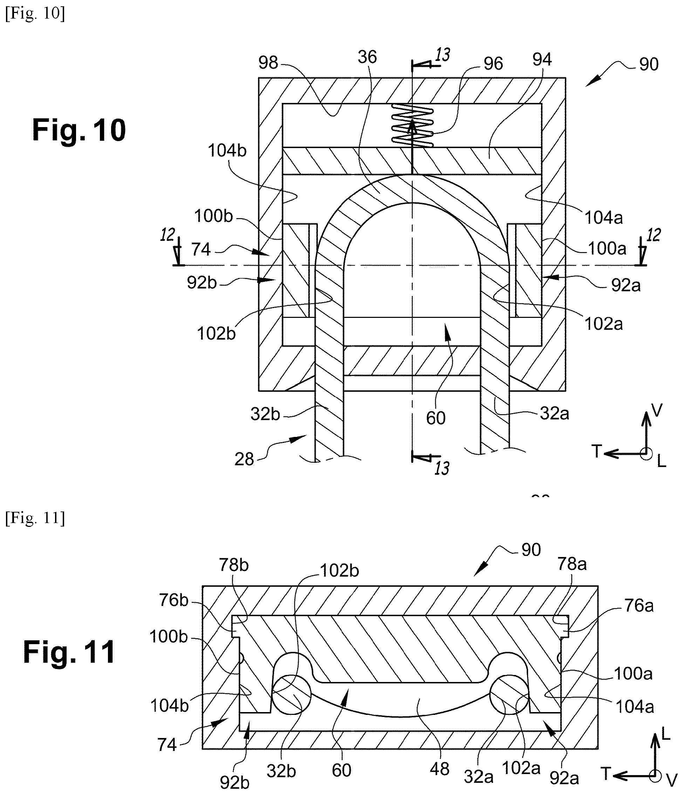

Selon une variante de réalisation de l'invention illustrée aux figures 10 à 13, le dispositif de blocage 74 du taquet 60 comporte un premier verrou 92a et un second verrou 92b de coincement automatique du taquet 60.

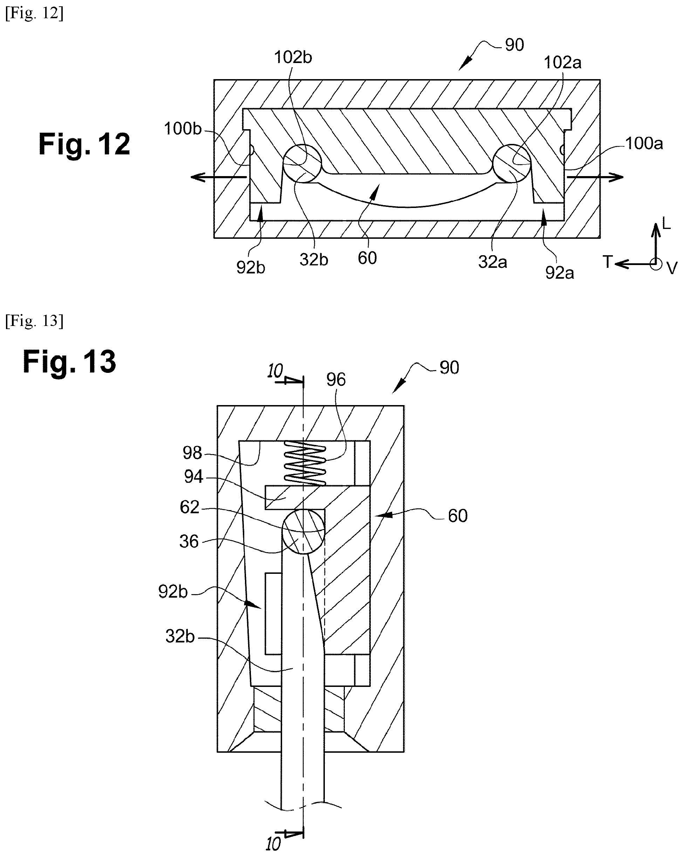

Selon cette variante de réalisation, comme décrit précédemment, le taquet 60 comporte un premier rail 76a et un second rail 76b qui s'étendent de part et d'autre du taquet 60, chacun suivant une direction verticale de coulissement, et qui sont montés coulissant dans une première gorge 78a et une seconde gorge 78b de guidage respectivement, délimitées chacune par le logement 48. Comme on peut le voir à la figure 13, le taquet 60 forme une corniche 94 qui fait saillie longitudinalement depuis la face d'appui 62 délimitée par le taquet 60, pour coopérer avec le doigt 36 de verrouillage du mât 28.

De plus, le dispositif de blocage 74 comporte un ressort 96 qui est interposé verticalement entre la corniche 94 solidaire du taquet 60 et une paroi de fond 98 du logement 48, pour rappeler élastiquement le taquet 60 à l'encontre du doigt 36 de verrouillage du mât 28.

Le premier verrou 92a et le second verrou 92b de coincement automatique du taquet 60 forment chacun un coin qui s'étend longitudinalement d'avant en arrière, depuis la face d'appui 62 délimitée par le taquet 60 et qui présente une section décroissante vers l'arrière.

Aussi, le premier verrou 92a et le second verrou 92b de coincement automatique sont délimités transversalement par une première joue 100a et une seconde joue 100b respectivement et par une première rampe 102a et une seconde rampe 102b respectivement.

La première joue 100a et la seconde joue 100b sont en appui transversal sur une première paroi latérale 104a et sur une seconde paroi latérale 104b respectivement du logement 48.

La première rampe 102a et la seconde rampe 102b sont agencées de façon à coopérer avec le premier bras 32a et le second bras 32b du mât 28, de sorte que lorsque le boîtier 30 passe de sa position libre illustrée à la figure 10, à sa position d'utilisation illustrée à la figure 11, le premier bras 32a et le second bras 32b du mât 28 glissent longitudinalement sur la première rampe 102a et la seconde rampe 102b respectivement du premier verrou 92a et du second verrou 92b, lesquels sont écartés et poussés transversalement contre la première paroi latérale 94a et la seconde paroi latéral 94b respectivement du logement 48, provoquant ainsi le coincement du taquet 60 par friction. Ainsi, selon cette variante de réalisation, le taquet 60 est entraîné en coulissement par le doigt 36 de verrouillage à l'encontre du ressort 96, jusqu'à ce que le galet moteur 42 entre en contact avec le pneumatique 14.

Ensuite, le doigt 36 de verrouillage glisse sur la seconde portion 72 du chemin de came 68, entraînant une légère bascule du boîtier 30 autour du doigt 36 de verrouillage et simultanément, le premier bras 32a et le second bras 32b du mât 28 écartent le premier verrou 92a et le second verrou 92b respectivement, lesquelles verrouillent le taquet 60 dans le logement 48.

Avantageusement, le dispositif de blocage 74 automatique permet au système 10 selon l'invention de s'adapter à des pneumatiques de différentes épaisseurs.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Système (10) pour l'assistance motorisée d'un cycle (12), **caractérisé en ce qu'**il comporte un mât (28) de support qui comprend au moins un bras (32a, 32b) s'étendant depuis une embase (34a, 34b) prévue pour être reliée sur un cycle (12), jusqu'à une extrémité libre formant un doigt (36) de verrouillage transversal perpendiculaire audit bras (32a, 32b), et le système (10) comportant un boîtier (30) moteur amovible qui est adapté pour être monté sur ledit mât (28) et qui comporte :
- un galet moteur (42) cylindrique qui est alimenté par une source d'énergie électrique et qui est entraîné en rotation autour d'un axe (C) transversal d'entraînement, ledit galet moteur (42) étant prévu pour entraîner une roue (14) du cycle (12) par friction sur une bande de roulement d'un pneumatique (46) équipant ladite roue (14),
- un logement (48) de verrouillage du boîtier (30) sur le mât (28), qui s'étend tangentiellement au galet moteur (42) suivant un axe (D) d'insertion du boîtier (30), depuis une entrée formant un canal (50), et
- un taquet (60) de verrouillage qui est agencé dans le logement (48) de verrouillage et qui comporte un cran d'arrêt (66) prévu pour coopérer avec le doigt (36) de verrouillage du mât (28) pour verrouiller le boîtier (30) sur le mât (28), et qui délimite une face d'appui (62) s'étendant tangentiellement au galet moteur (42), ladite face d'appui (62) étant destinée à coopérer avec un premier côté du bras (32a, 32b) du mât (28),
et **en ce que** le boîtier (30) est apte à être entraîné, dans un mouvement de verrouillage dirigé vers l'embase du mât (28) tangentiellement au galet moteur (42), depuis une position libre dans laquelle le boîtier (30) est désolidarisé du mât (28), jusqu'à une position d'utilisation dans laquelle le boîtier (30) est bloqué en translation le long du bras (32a, 32b) du mât (28) suivant un premier sens et un second sens opposés, respectivement par le doigt (36) de verrouillage qui est en appui sur le cran d'arrêt (66) du taquet (60) et par le galet moteur (42) qui est en appui sur le pneumatique (46), et dans laquelle le boîtier (30) est bloqué en pivotement autour d'un axe transversal matérialisé par le doigt (36) de verrouillage, suivant le sens de rotation du galet moteur (42), par le bras (32a, 32b) du mât (28) de support qui est en appui contre ladite face d'appui (62) prévue à cet effet.

2. Système (10) pour l'assistance motorisée d'un cycle (12) selon la revendication 1, **caractérisé en ce que** le taquet (60) est monté coulissant dans le logement (48), tangentiellement au galet moteur (42), entre une pluralité de positions dans chacune desquelles le taquet (60) est apte à être immobilisé par un dispositif de blocage (74), pour permettre un réglage de l'écartement du boîtier (30) par rapport au pneumatique (46) lorsque le boîtier (30) occupe sa position d'utilisation, afin de régler la pression exercée par le galet moteur (42) sur le pneumatique (46).

3. Système (10) pour l'assistance motorisée d'un cycle (12) selon la revendication 2, **caractérisé en ce que** le dispositif de blocage (74) du taquet (60) comporte au moins un verrou (92a, 92b) de coincement automatique du taquet (60), qui coopère avec le mât (28) par coopération de forme pour verrouiller automatiquement le taquet (60) lorsque le boîtier (30) bascule dans sa position d'utilisation.

4. Système (10) pour l'assistance motorisée d'un cycle (12) selon la revendication 3, **caractérisé en ce que** le dispositif de blocage du taquet comporte un ressort pour rappeler élastiquement le taquet à l'encontre du doigt 36 de verrouillage du mât 28.

5. Système (10) pour l'assistance motorisée d'un cycle (12) selon l'une quelconque des revendications précédentes, **caractérisé en ce que** le taquet (60) délimite un chemin de came (68) qui est prévu pour coopérer avec le doigt (36) de verrouillage du mât (28) et qui présente successivement, suivant l'axe (D) d'insertion du boîtier (30), une première portion (70) et une seconde portion (72) formant deux pentes opposées, la seconde portion (72) étant formée au moins en partie par le cran d'arrêt (66), et **en ce qu'**au cours dudit mouvement de verrouillage, le doigt (36) de verrouillage suiveur glisse sur ladite première portion (70) du chemin de came (68) de sorte que le boîtier (30) coulisse vers le pneumatique (46) le long du mât (28) jusqu'à ce que le galet moteur (42) presse et déforme le pneumatique (46) de la roue (14) du cycle (12) puis, successivement, le doigt (36) de verrouillage glisse sur ladite seconde portion (72) du chemin de came (68), entraînant une bascule du boîtier (30) autour du doigt (36) de verrouillage et provoquant le relâchement partiel de la pression exercée par le galet moteur (42) sur le pneumatique (46), jusqu'à ce que le boîtier (30) atteigne sa position d'utilisation.

6. Système (10) pour l'assistance motorisée d'un cycle (12) selon l'une quelconque des revendications précédentes, **caractérisé en ce que** le canal (50) est conçu pour guider le mât (28) au cours du mouvement de verrouillage du boîtier (30), et **en ce que** le canal (50) comporte une paroi (54) qui est adaptée pour être en appui sur un second côté du bras (32a, 32b) du mât (28), lorsque le boîtier (30) occupe sa position d'utilisation, pour s'opposer au pivotement du boîtier (30) autour d'un axe transversal matérialisé par le doigt (36) de verrouillage, suivant un sens opposé au sens de rotation du galet moteur (42).

7. Système (10) pour l'assistance motorisée d'un cycle (12) selon l'une quelconque des revendications précédentes, **caractérisé en ce que** le mât (28) est prévu pour s'étendre suivant une direction perpendiculaire à l'axe (A) de la roue (14) du cycle (12).

8. Système (10) pour l'assistance motorisée d'un cycle (12) selon l'une quelconque des revendications précédentes, **caractérisé en ce que** le mât (28) comporte deux bras (32a, 32b) qui s'étendent parallèlement, chacun depuis une première extrémité formant ladite embase (34a, 34b) du mât (28), jusqu'à une seconde extrémité reliée sur ledit doigt (36) de verrouillage.

9. Système (10) pour l'assistance motorisée d'un cycle (12) selon l'une quelconque des revendications précédentes, **caractérisé en ce que** le mât (28) est monté sur une seconde fourche (20) de support comprenant une première jambe (22a) et une seconde jambe (22b) qui sont prévues pour s'étendre de part et d'autre de ladite roue (14) du cycle (12).

10. Cycle (12) qui comporte au moins une roue (14) équipée d'un pneumatique (46), **caractérisé en ce qu'**il est équipé d'un système (10) pour l'assistance motorisée selon l'une quelconque des revendications 1 à 9.

## Patentansprüche

1. System (10) zur motorisierten Unterstützung eines Fahrrads (12), **dadurch gekennzeichnet, dass** es einen Stützmast (28) aufweist, der mindestens einen Arm (32a, 32b) umfasst, der sich von einer Basis (34a, 34b) erstreckt, die zur Verbindung mit einem Fahrrad (12) vorgesehen ist, bis zu einem freien Ende, das einen quer dazu angeordneten Verriegelungsfinger (36) bildet, der senkrecht zu diesem Arm (32a, 32b) steht, und wobei das System (10) ein abnehmbares Motorgehäuse (30) aufweist, das zur Montage an dem Mast (28) geeignet ist und Folgendes aufweist:
- eine zylindrische Antriebsrolle (42), die von einer elektrischen Energiequelle versorgt wird und die um eine Querantriebsachse (C) in Drehung angetrieben wird, wobei die Antriebsrolle (42) vorgesehen ist, um ein Rad (14) des Fahrrads (12) durch Reibung auf einer Lauffläche eines Reifens (46), mit dem das Rad (14) ausgestattet ist, anzutreiben,
- eine Aufnahme (48) zur Verriegelung des Gehäuses (30) an dem Mast (28), die sich tangential zu der Antriebsrolle (42) entlang einer Einführungsachse (D) des Gehäuses (30) von einem einen Kanal (50) bildenden Eingang aus erstreckt, und
- einen Verriegelungsriegel (60), der in der Verriegelungsaufnahme (48) angeordnet ist und eine Rastnase (66) aufweist, die vorgesehen ist, um mit dem Verriegelungsfinger (36) des Masts (28) zusammenzuwirken, um das Gehäuse (30) an dem Mast (28) zu verriegeln, und der eine Auflagefläche (62) begrenzt, die sich tangential zu der Antriebsrolle (42) erstreckt, wobei die Auflagefläche (62) dazu bestimmt ist, mit einer ersten Seite des Arms (32a, 32b) des Masts (28) zusammenzuwirken, und dass das Gehäuse (30) in einer Verriegelungsbewegung, die in Richtung der Basis des Mastes (28) tangential zur Antriebsrolle (42) gerichtet ist, von einer freien Position, in der das Gehäuse (30) von dem Mast (28) getrennt ist, bis zu einer Gebrauchsposition angetrieben werden kann, in der das Gehäuse (30) entlang des Arms (32a, 32b) des Masts (28) in einer ersten und zweiten entgegengesetzten Richtung jeweils durch den Verriegelungsfinger (36), der auf der Rastnase (66) des Riegels (60) aufliegt, und durch die Antriebsrolle (42), die auf den Reifen (46) aufliegt, in der Translation blockiert ist und in der das Gehäuse (30) um eine durch den Verriegelungsfinger (36) gebildete Querachse in Drehrichtung der Antriebsrolle (42) durch den Arm (32a, 32b) des Stützmasts (28) in der Schwenkung blockiert ist, der auf der zu diesem Zweck vorgesehenen Auflagefläche (62) aufliegt.

2. System (10) zur motorisierten Unterstützung eines Fahrrads (12) nach Anspruch 1, **dadurch gekennzeichnet, dass** der Riegel (60) in der Aufnahme (48), tangential zu der Antriebsrolle (42), zwischen einer Vielzahl von Positionen, in denen der Riegel (60) jeweils durch eine Sperrvorrichtung (74) immobilisierbar ist, verschiebbar montiert ist, um eine Einstellung des Abstands des Gehäuses (30) zu dem Reifen (46) zu ermöglichen, wenn das Gehäuse (30) seine Gebrauchsposition einnimmt, um den Druck der Antriebsrolle (42) auf den Reifen (46) einzustellen.

3. System (10) zur motorisierten Unterstützung eines Fahrrads (12) nach Anspruch 2, **dadurch gekennzeichnet, dass** die Verriegelungsvorrichtung (74) des Riegels (60) mindestens einen Riegel (92a, 92b) zum automatischen Einklemmen des Riegels (60) aufweist, der mit dem Mast (28) formschlüssig zusammenwirkt, um den Riegel (60) automatisch zu verriegeln, wenn das Gehäuse (30) in seine Gebrauchsposition kippt.

4. System (10) zur motorisierten Unterstützung eines Fahrrads (12) nach Anspruch 3, **dadurch gekennzeichnet, dass** die Arretierungsvorrichtung des Riegels eine Feder zum elastischen Zurückziehen des Riegels gegen den Verriegelungsfinger 36 des Masts 28 aufweist.

5. System (10) zur motorisierten Unterstützung eines Fahrrads (12) nach einem der vorhergehenden Ansprüche, **dadurch gekennzeichnet, dass** der Riegel (60) einen Nockenweg (68) begrenzt, der vorgesehen ist, um mit dem Verriegelungsfinger (36) des Masts (28) zusammenzuwirken, und der entlang der Einführungsachse (D) des Gehäuses (30) nacheinander einen ersten Abschnitt (70) und einen zweiten Abschnitt (72) aufweist, die zwei gegenüberliegende Steigungen bilden, wobei der zweite Abschnitt (72) mindestens teilweise durch die Rastnase (66) gebildet wird, und dass während der Verriegelungsbewegung der Mitnahmeverriegelungsfinger (36) auf dem ersten Abschnitt (70) des Nockenwegs (68) gleitet, sodass das Gehäuse (30) entlang des Mastes (28) in Richtung des Reifens (46) gleitet, bis die Antriebsrolle (42) den Reifen (46) des Rads (14) des Fahrrads (12) drückt und verformt, anschließend nacheinander der Verriegelungsfinger (36) auf dem zweiten Abschnitt (72) des Nockenwegs (68) gleitet, wodurch das Gehäuse (30) um den Verriegelungsfinger (36) herum gekippt wird und der von der Antriebsrolle (42) auf den Reifen (46) ausgeübte Druck teilweise nachlässt, bis das Gehäuse (30) seine Gebrauchsposition erreicht.

6. System (10) zur motorisierten Unterstützung eines Fahrrads (12) nach einem der vorhergehenden Ansprüche, **dadurch gekennzeichnet, dass** der Kanal (50) ausgebildet ist, um den Mast (28) während der Verriegelungsbewegung des Gehäuses (30) zu führen, und dass der Kanal (50) eine Wand (54) aufweist, die geeignet ist, auf einer zweiten Seite des Arms (32a, 32b) des Masts (28) aufzuliegen, wenn das Gehäuse (30) seine Gebrauchsposition einnimmt, um dem Schwenken des Gehäuses (30) um eine durch den Verriegelungsfinger (36) gebildete Querachse in entgegengesetzter Richtung zu der Drehrichtung der Antriebsrolle (42) entgegenzuwirken.

7. System (10) zur motorisierten Unterstützung eines Fahrrads (12) nach einem der vorhergehenden Ansprüche, **dadurch gekennzeichnet, dass** der Mast (28) vorgesehen ist, sich in einer Richtung senkrecht zur Achse (A) des Rads (14) des Fahrrads (12) zu erstrecken.

8. System (10) zur motorisierten Unterstützung eines Fahrrads (12) nach einem der vorhergehenden Ansprüche, **dadurch gekennzeichnet, dass** der Mast (28) zwei Arme (32a, 32b) aufweist, die sich parallel jeweils von einem ersten Ende, das die Basis (34a, 34b) des Masts (28) bildet, bis zu einem zweiten Ende erstrecken, das mit dem Verriegelungsfinger (36) verbunden ist.

9. System (10) zur motorisierten Unterstützung eines Fahrrads (12) nach einem der vorhergehenden Ansprüche, **dadurch gekennzeichnet, dass** der Mast (28) an einer zweiten Stützgabel (20) montiert ist, die ein erstes Bein (22a) und ein zweites Bein (22b) umfasst, die vorgesehen sind, sich auf beiden Seiten des Rads (14) des Fahrrads (12) zu erstrecken.

10. Fahrrad (12), das mindestens ein Rad (14) aufweist, das mit einem Reifen (46) ausgestattet ist, **dadurch gekennzeichnet, dass** es mit einem System (10) zur motorisierten Unterstützung nach einem der Ansprüche 1 bis 9 ausgestattet ist.

## Claims

1. System (10) for motorised assistance of a cycle (12), **characterised in that** it includes a support post (28) that comprises at least one arm (32a, 32b) extending from a base (34a, 34b) provided to be connected onto a cycle (12) to a free end forming a transverse locking finger (36) perpendicular to said arm (32a, 32b), and the system (10) including a removable motor unit (30) that is adapted to be mounted on said post (28) and which includes:
- a cylindrical drive roller (42) which is powered by a source of electric energy and which is driven in rotation about a transverse drive axis (C), said drive roller (42) being provided to drive a wheel (14) of the cycle (12) by friction on a tread of a tyre (46) with which said wheel (14) is provided,
- a housing (48) for locking the unit (30) on the post (28), which extends tangentially to the drive roller (42) along an axis (D) of insertion of the unit (30), from an inlet forming a channel (50), and
- a locking lug (60) which is arranged in the locking housing (48) and which includes a stop notch (66) provided to cooperate with the locking finger (36) of the post (28) to lock the unit (30) on the post (28), and which defines a bearing face (62) extending tangentially to the drive roller (42), said bearing face (62) being intended to cooperate with a first side of the arm (32a, 32b) of the post (28),
and **in that** the unit (30) is capable of being driven, in a locking movement directed towards the base of the post (28) tangentially to the drive roller (42), from a free position in which the unit (30) is detached from the post (28), to a position of use in which the unit (30) is locked in translation along the arm (32a, 32b) of the post (28) in opposite first and second directions, respectively by the locking finger (36) which bears on the stop notch (66) of the lug (60) and by the drive roller (42) which bears on the tyre (46), and wherein the unit (30) is blocked from pivoting about a transverse axis embodied by the locking finger (36), in the direction of rotation of the drive roller (42), by the arm (32a, 32b) of the support post (28) which bears against said bearing face (62) provided for this purpose.

2. System (10) for motorised assistance of a cycle (12) according to claim 1, **characterised in that** the lug (60) is mounted to slide in the housing (48), tangentially to the drive roller (42), between a plurality of positions in each of which the lug (60) is capable of being immobilised by a locking device (74), to allow adjustment of the distance of the unit (30) from the tyre (46) when the unit (30) occupies its position of use, in order to adjust the pressure exerted by the drive roller (42) on the tyre (46).

3. System (10) for motorised assistance of a cycle (12) according to claim 2, **characterised in that** the device (74) for locking the lug (60) includes at least one lock (92a, 92b) for automatically locking the lug (60), which cooperates with the post (28) by shape cooperation to automatically lock the lug (60) when the unit (30) tilts into its position of use.

4. System (10) for motorised assistance of a cycle (12) according to claim 3, **characterised in that** the device for locking the lug includes a spring for elastically returning the lug against the locking finger 36 of the post 28.

5. System (10) for motorised assistance of a cycle (12) according to any one of the preceding claims, **characterised in that** the lug (60) defines a cam path (68) which is provided to cooperate with the locking finger (36) of the post (28) and which successively has, along the axis (D) of insertion of the unit (30), a first portion (70) and a second portion (72) forming two opposite slopes, the second portion (72) being formed at least partly by the stop notch (66), and **in that** during said locking movement, the follower locking finger (36) slides on said first portion (70) of the cam path (68) so that the unit (30) slides towards the tyre (46) along the post (28) until the drive roller (42) presses and deforms the tyre (46) of the wheel (14) of the cycle (12) then, successively, the locking finger (36) slides on said second portion (72) of the cam path (68), causing the unit (30) to tilt about the locking finger (36) and causing the partial release of the pressure exerted by the drive roller (42) on the tyre (46), until the unit (30) reaches its position of use.

6. System (10) for motorised assistance of a cycle (12) according to any one of the preceding claims, **characterised in that** the channel (50) is designed to guide the post (28) during the locking movement of the unit (30), and **in that** the channel (50) includes a wall (54) which is adapted to bear on a second side of the arm (32a, 32b) of the post (28), when the unit (30) occupies its position of use, to oppose the pivoting of the unit (30) about a transverse axis embodied by the locking finger (36), in a direction opposite to the direction of rotation of the drive roller (42).

7. System (10) for motorised assistance of a cycle (12) according to any one of the preceding claims, **characterised in that** the post (28) is provided to extend along a direction perpendicular to the axis (A) of the wheel (14) of the cycle (12).

8. System (10) for motorised assistance of a cycle (12) according to any one of the preceding claims, **characterised in that** the post (28) includes two arms (32a, 32b) which extend in parallel, each from a first end forming said base (34a, 34b) of the post (28) to a second end connected to said locking finger (36).

9. System (10) for motorised assistance of a cycle (12) according to any one of the preceding claims, **characterised in that** the post (28) is mounted on a second support fork (20) comprising a first leg (22a) and a second leg (22b) which are provided to extend on either side of said wheel (14) of the cycle (12).

10. Cycle (12) which includes at least one wheel (14) equipped with a tyre (46), **characterised in that** it is equipped with a system (10) for motorised assistance according to any one of claims 1 to 9.
